# EUROPEAN PATENT APPLICATION

(11) **EP 3 269 628 A1**
(43) Date of publication of application: **17.01.2018**
(21) Application number: 16761280.3
(22) Date of filing: 02.03.2016
(51) Int. Cl.: B62M 6/55

(54) **ELECTRIC BICYCLE**

(30) Priority: 09.03.2015 JP 2015045385
(71) Applicant: Panasonic Intellectual Property Management Co., Ltd., Osaka-shi, Osaka 540-6207 (JP)
(72) Inventor: KAWAKAMI, Masafumi, Osaka-shi, Osaka 540-6207 (JP)
(74) Representative: Grünecker Patent- und Rechtsanwälte PartG mbB
(86) International application number: PCT/JP2016/001130
(87) International publication number: WO 2016/143303

(57) **Abstract**

Providing is an electric bicycle including driving unit (20) having first motor (21A) and second motor (21B) and planetary gear mechanism (50) having planetary carrier (54), sun gear (51), and internal gear (55) which rotatably support planetary gear (52) are provided. In addition, a resultant force obtained by combining a man-powered driving force and an auxiliary driving force from first motor (21A) is transferred to a first component which is any one of planetary carrier (54), sun gear (51), and internal gear (55) in planetary gear mechanism (50). In addition, an auxiliary driving force from second motor (21B) is transferred to a second component which is any one of planetary carrier (54), sun gear (51), and internal gear (55) in planetary gear mechanism (50) and which is different from the first component.

## Description

### TECHNICAL FIELD

The present invention relates to an electric bicycle which can travel by adding an auxiliary driving force generated by a motor to a man-powered driving force by the pedaling force from a pedal and specifically, a transmission device for an electric bicycle having a stepless transmission function which can continuously change transmission ratio.

### BACKGROUND ART

By having a motor to which electric power is supplied from an electric storage device such as a battery, detecting a man-powered driving force including a pedaling force added to a pedal by a torque sensor, and adding an auxiliary driving force (assisting force) of a motor corresponding to the man-powered driving force, electric bicycles that can easily travel even on slopes or the like are already known.

In this electric bicycle, for example, structures disclosed in PTL 1 and PTL 2 and the like are proposed as a structure having a stepless transmission function which can continuously change transmission ratio.

PTL 1 discloses a bicycle transmission including a press shell and a friction shell to which a force is transferred by friction in contact with each other, a friction ring, a double cone which rotates about a cone shaft and is in contact with the friction shell and the friction ring, and an adjustment sleeve which adjusts a position of the double cone. By adjusting the position of the double cone by mechanically rotating the adjustment sleeve from the outside, the length (rotational radius of contact portion) of the contact point between the double cone and the friction shell from an axial center of the cone shaft and the length (rotational radius of contact portion) of the contact point between the double cone and the friction ring from the axial center of the cone shaft are mechanically changed to perform a stepless transmission.

In addition, PTL 2 discloses a bicycle transmission system which has two motors and two planetary gear mechanisms and which inputs a man power (pedaling force from pedal) to a first component (carrier of planetary gear in the embodiment) of one of the planetary gear mechanisms, rotates a second component (sun gear of planetary gear in the embodiment) of each planetary gear mechanism by the motors respectively, and thus outputs from the third component (annular internal gear of planetary gear in the embodiment) of each planetary gear mechanism.

### Citation List

### Patent Literature

PTL 1: Japanese Patent Unexamined Publication No. 2013-249060
PTL 2: Japanese Patent No. 5631899

### SUMMARY OF THE INVENTION

However, in the bicycle transmission disclosed in PTL 1, there is a fear that the transfer efficiency of a force decreases and the use efficiency of a battery is lowered, since the bicycle transmission has a structure that the force is transferred by a frictional force of a friction shell, a friction ring or the like at the time of operation thereof and a lot of heat is generated by a frictional force to involve a lot of energy loss. In addition, since the bicycle transmission has a structure that the transmission ratio is changed by using a double cone, there is a fear that the transfer efficiency of the force decreases and the use efficiency of the battery is lowered also by this configuration.

In addition, in the bicycle transmission system disclosed in PTL 2, since the input position (for example, carrier which is first component) from a man power to a planetary gear mechanism and the position (for example, sun gear which is second component) for inputting an auxiliary driving force from the motor are different from each other, there is a fear that the force output range cannot be increased.

The present invention provides an electric bicycle having good force transfer efficiency and a wide force output range.

The present invention is an electric bicycle that has a driving unit having a motor and can travel by adding an auxiliary driving force generated by a motor to a man-powered driving force by a pedal effort from a pedal. In addition, the electric bicycle includes a crank shaft to which the man-powered driving force from a pedal is transferred and a planetary gear mechanism that has a planetary carrier which rotatably supports a planetary gear, a sun gear, and an internal gear. In addition, the motor includes a first motor and a second motor and a resultant force obtained by combining the man-powered driving force and an auxiliary driving force from the first motor is transferred to a first component which is any one of the planetary carrier, the sun gear, and the internal gear in the planetary gear mechanism. In addition, the auxiliary driving force from a second motor is transferred to the second component which is any one of the planetary carrier, the sun gear, and the internal gear in the planetary gear mechanism and is different from the first component. Further, a third component which is any one of the planetary carrier, the sun gear, and the internal gear in the planetary gear mechanism and is different from the first component and the second component is configured to perform stepless transmission so as to be rotatable by adjusting a rotational speed of a second motor.

According to the configuration, since the auxiliary driving forces of the first motor and the second motor are added by using the planetary gear mechanism instead of the structure that transfers the force by the frictional force, the force transfer efficiency can be well maintained. In addition, since only the man-powered driving force is not transferred to the first component of the planetary gear mechanism, but a resultant force obtained by combining the man-powered driving force and the auxiliary driving force from the first motor is transferred, the output range of the force can be further widen than in a case of a configuration which combines the auxiliary driving force with the man-powered driving force after transmission and the configuration which combines the man-powered driving force with the auxiliary driving force after transmission.

Further, in the invention, the second component is an internal gear. With the configuration, while also adding the auxiliary driving force of the second motor by rotating the internal gear at a large rotation speed, stepless output can be performed by changing the speed to a higher rotational speed.

In addition, in a case where the second component is the internal gear as described above, it is preferable to provide a reverse rotation preventing mechanism that prevents the internal gear from rotating in a reverse direction to a rotation driving direction by the second motor. According to the configuration, when the auxiliary driving force is not added, in a case where the remaining amount of the battery is low, or the like, even when the first motor and the second motor are not energized, a force corresponding to the man-powered driving force can be output to a rear wheel side without trouble. In other words, for example, in a case of a configuration disclosed in PTL 2 or the like, there is a configuration that a man power is input to one component of the planetary gear mechanism (carrier of planetary gear in the embodiment of PTL 2), and other components (in the embodiment of PTL 2, sun gear of planetary gear) is rotated by a motor (auxiliary driving) and output is performed from other components. Therefore, in the configuration of PTL 2, unless both the motors are energized, there is a problem that the components (for example, sun gear) connected to the motor idle and the man power is hardly output, but in the present invention, such a problem does not occur.

In addition, the sun gear may be used or the planetary carrier may be used as the first component to which the resultant force obtained by combining the man power driving force with the auxiliary driving force from the first motor is transferred. By using the sun gear as the first component, the resultant force within a comparatively low rotational speed range can be output as compared with a case of using the planetary carrier as the first component. In addition, by using the planetary carrier as the first component, the resultant force within a comparatively high rotational speed range can be output.

In addition, it is preferable that the second motor is configured to be rotatable after starting of traveling without being driven at the time of starting of traveling.

In addition, in the invention, it is preferable that the planetary gear mechanism is arranged in an inside of the driving unit, the driving unit is disposed at an intermediate position between a front wheel and a rear wheel, and the sun gear and the internal gear of the planetary gear mechanism are disposed coaxially with the crank shaft. In addition, it is preferable that a driving force output wheel body which is coaxial with the crank shaft rotates at a higher speed by the second motor rotating at a higher speed.

In addition, according to the invention, the man-powered driving force, the auxiliary driving force from the first motor, and the auxiliary driving force from the second motor are combined with each other as a resultant force for output via the planetary gear mechanism, and the resultant force for output is configured to be transferred to the rear wheel via a driving force output wheel body which is coaxial with the crank shaft and an endless driving force transfer body wound around the driving force output wheel body. As the endless driving force transfer body, a chain may be used but instead of this, a toothed belt may be used.

### BRIEF DESCRIPTION OF DRAWINGS

FIG. 1 is a side view illustrating an entire electric bicycle according to an embodiment of the invention.
FIG. 2 is a partially cut-away side view illustrating the electric bicycle according to the embodiment of the invention.
FIG. 3 is a right side view illustrating a driving unit of the electric bicycle according to the embodiment of the invention.
FIG. 4 is a plan sectional view illustrating a driving unit of an electric bicycle according to a first embodiment of the invention.
FIG. 5 is an enlarged plan sectional view illustrating a main portion of the driving unit of the electric bicycle according to the first embodiment of the invention.
FIG. 6 is a schematic right side view illustrating a main portion taken along arrow 6-6 in FIG. 5 of the driving unit of the electric bicycle in a state at the time of starting of traveling according to the first embodiment of the invention.
FIG. 7 is a schematic right side view illustrating a main portion taken along arrow 6-6 in FIG. 5 of the driving unit of the electric bicycle in a state of traveling according to the first embodiment of the invention.
FIG. 8 is a plan sectional view illustrating a driving unit of an electric bicycle according to a second embodiment of the invention.
FIG. 9 is an enlarged plan sectional view illustrating a main portion of the driving unit of the electric bicycle according to the second embodiment of the invention.
FIG. 10 is a schematic right side view illustrating a main portion taken along arrow 10-10 in FIG. 9 of the driving unit of the electric bicycle in a state at the time of starting of traveling according to the second embodiment of the present invention.
FIG. 11 is a schematic right side view illustrating a main portion taken along arrow 10-10 in FIG. 9 of the driving unit of the electric bicycle in a state of traveling according to the second embodiment of the present invention.

### DESCRIPTION OF EMBODIMENTS

Hereinafter, an electric bicycle according to an embodiment of the invention will be described with reference to the drawings. In the following description, the left-right direction and the front-rear direction refer to directions in a state of mounting on electric bicycle 1 in the traveling direction. However, the configuration of the invention is not limited to a configuration described below.

### (First Embodiment)

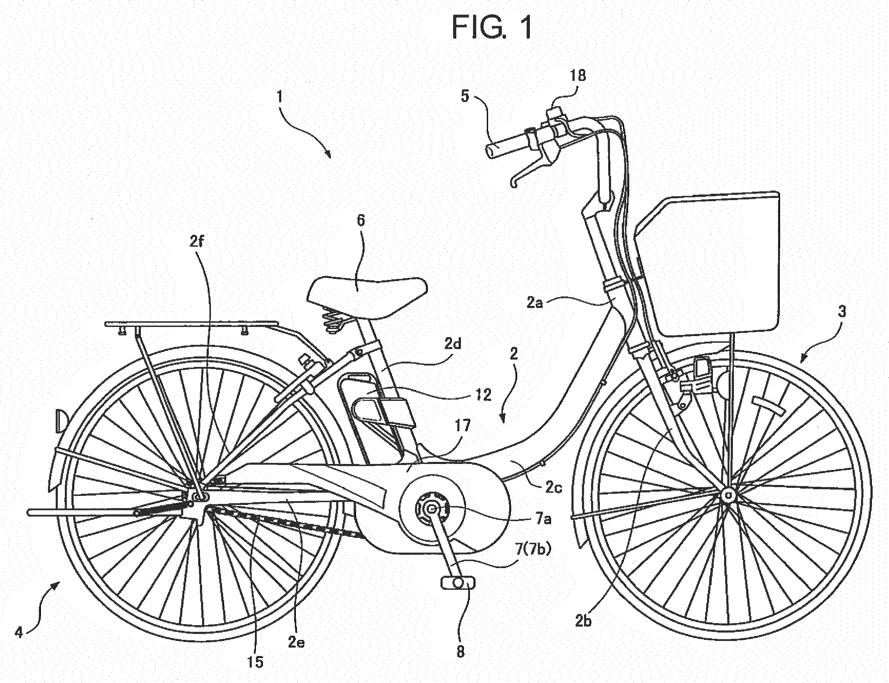

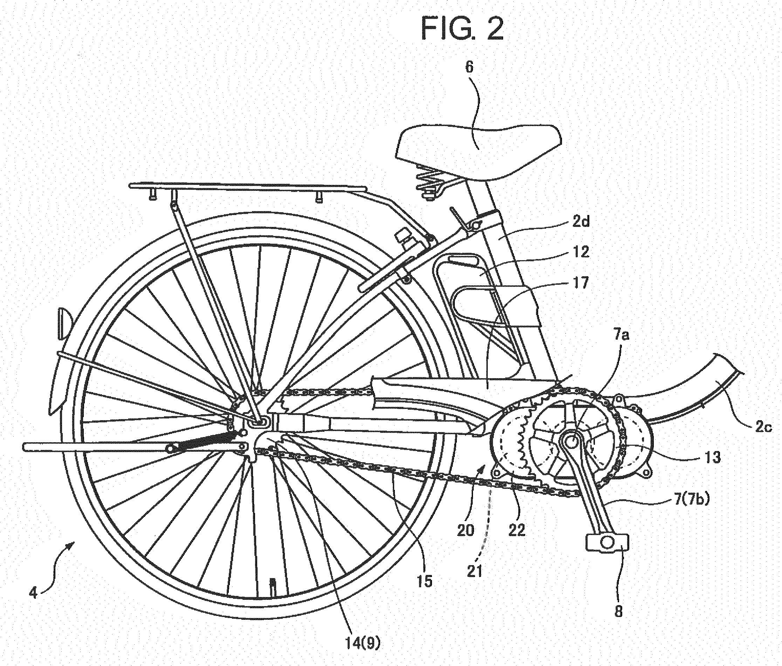

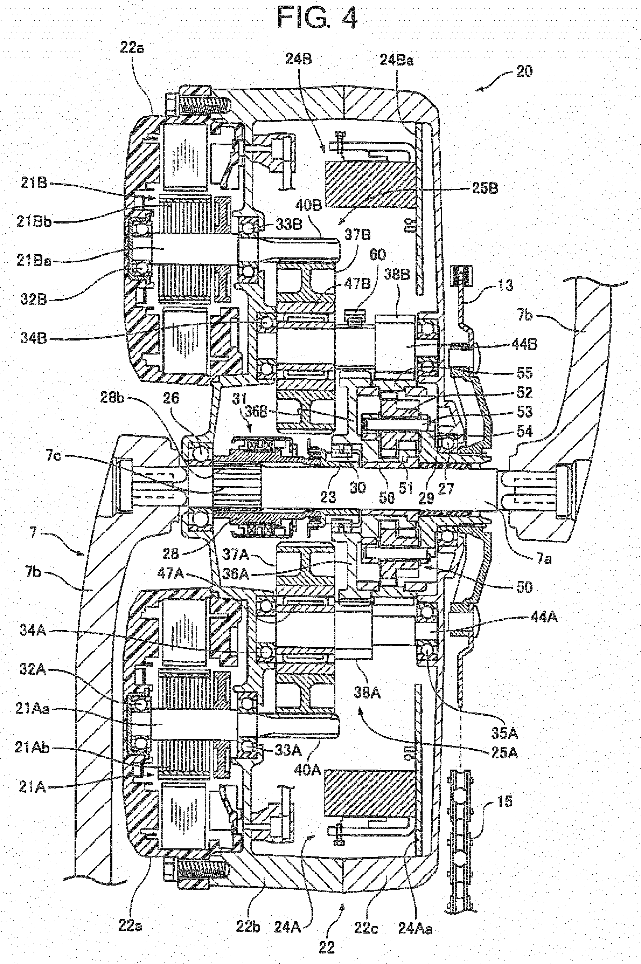

FIG. 1 and FIG. 2 illustrate electric bicycle 1 according to a first embodiment of the invention. As illustrated in FIG. 1 and FIG. 2, electric bicycle 1 includes metal frame 2 having head pipe 2a, front fork 2b, main pipe 2c, vertical pipe 2d, chain stay 2e, seat stay 2f, and the like. In addition, electric bicycle 1 includes front wheel 3 which is rotatably attached to a lower end of front fork 2b, rear wheel 4 which is rotatably attached to a rear end of chain stay 2e, handle 5 which changes the orientation of front wheel 3, saddle 6, and, crank 7 and pedal 8 to which a man-powered driving force including a pedaling force is applied. In addition, electric bicycle 1 includes driving unit 20 in which first motor 21A and second motor 21B (see FIG. 4 and the like) which are electric motors as driving sources for generating an auxiliary driving force (assisting force) and controller 24A and 24B (see FIG. 4) that perform various types of electric controls of including control of first motor 21A and second motor 21B. In addition, electric bicycle 1 includes battery 12 which is a secondary battery that supplies electric power for driving first motor 21A and second motor 21B and transmission stage hand operation portion 18 which is attached to handle 5 or the like, is operable by an occupant and the like, and can arbitrarily set the speed of the transmission function of planetary gear mechanism 25 to be described below. In addition, electric bicycle 1 includes a hand setting portion (not illustrated) which is attached to handle 5 or the like, can be operated by an occupant or the like, and sets power switching of electric bicycle 1, a traveling mode and the like. In addition, electric bicycle 1 includes a driving sprocket 13 (also referred to as front sprocket, crank sprocket and front gear) as a driving force output wheel body which is attached so as to rotate coaxially and integrally rotates with crank shaft 7a and outputs a resultant force obtained by combining a man-powered driving force and auxiliary driving force and rear sprocket (sometimes referred to as a rear gear) 14 as a rear wheel body attached to hub (also referred to as a rear hub) 9 of rear wheel 4. Further, electric bicycle 1 includes chain 15 as an endless driving force transfer body wound endlessly in a rotatable state over driving sprocket 13 and rear sprocket 14, chain cover 17 which covers chain 15 and the like from the side, and the like. As described above, in electric bicycle 1 according to the embodiment of the invention, two motors such as first motor 21A and second motor 21B are provided in driving unit 20.

Battery 12 is an example of an electric storage device and preferably is a secondary battery, but another example of the electric storage device may be a capacitor or the like. Crank 7 includes crank arms 7b which are respectively provided on the left and right sides and crank shaft 7a which connects left and right crank arms 7b to each other and pedal 8 is rotatably attached to an end portion of crank arm 7b.

As illustrated in Fig. 1 and Fig. 2, in electric bicycle 1, driving unit 20 is disposed at an intermediate position (more specifically, lower portion in intermediate position in more detail) between front wheel 3 and rear wheel 4, such as substantially rearward of crank shaft 7a. With such an disposition configuration, since driving unit 20 having a relatively large weight is disposed at the center in the front-rear direction of electric bicycle 1, front wheel 3 and rear wheel 4 are likely to be lifted, even if there is a step difference in a traveling path, it can be likely to jump over the step difference, and thus a vehicle car body (frame 2 or the like) of electric bicycle 1 is handled well, and the traveling stability is also good.

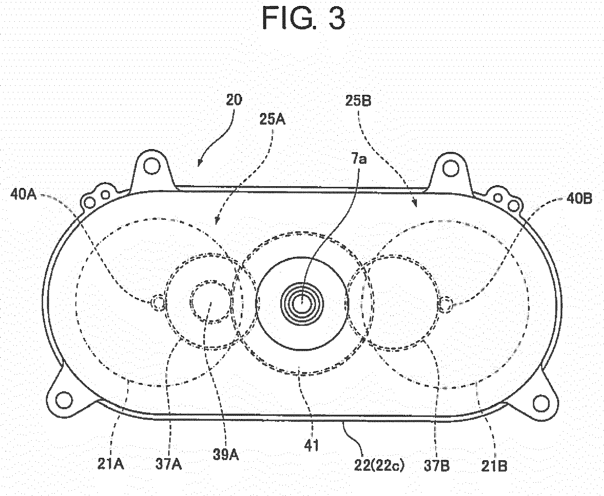

FIG. 3 is a right side view of driving unit 20 and FIG. 4 is a plan cross-sectional view of driving unit 20.

As illustrated in FIG. 3 and FIG. 4, in driving unit 20, an outer shell portion thereof or the like is configured by unit case 22 including motor case 22a, left case 22b, and right case 22c and crank shaft 7a passes through a central portion of driving unit 20 in right and left directions. In addition, substantially cylindrical man power transfer body 28 to which the man-powered driving force from crank shaft 7a is transferred, interlocking cylindrical body 23 to which the man-powered driving force from man power transfer body 28 is transferred, one-way clutch (one-way clutch for cutting auxiliary driving force) 30 and the like to which the man-powered driving force from interlocking cylindrical body 23 is transferred, and the like are disposed on the outer periphery of crank shaft 7a. In addition, resultant force transfer body 29 that transfers a resultant force obtained by combining the man-powered driving force and auxiliary driving force from the motor 21 to driving sprocket 13 is arranged.

In addition, planetary gear mechanism 50 which can perform the stepless change speed while adding a force of second motor 21B to the resultant force (first resultant force) obtained by combining the man-powered driving force and the auxiliary driving force from first motor 21A is provided at a position close to right of the center portion in driving unit 20 in unit case 22 in the front-rear direction. In addition, first deceleration mechanism 25A having deceleration gear 36A for low speed, first intermediate shaft deceleration gear 37A, second intermediate shaft deceleration gear 38A, and motor shaft deceleration gear 40A, which are a plurality of deceleration gears is arranged at a position close to the rear portion of driving unit 20. As will be described below, first deceleration mechanism 25A transfers the auxiliary driving force of first motor 21A to sun gear 51 of planetary gear mechanism 50 while decelerating the auxiliary driving force. In addition, second deceleration mechanism 25B having deceleration gear 36B for low speed, first intermediate shaft deceleration gear 37B, second intermediate shaft deceleration gear 38B, toothed portion 39B for locking and motor shaft deceleration gear 40B which are a plurality of deceleration gears are arranged at a position close to front portion of driving unit 20 in unit case 22. As will be described below, second deceleration mechanism 25B transfers the auxiliary driving force of second motor 21B to internal gear 55 of planetary gear mechanism 50 while decelerating the auxiliary driving force.

In the embodiment, planetary gear mechanism 50 also provides a function as an internal transmission (interior type transmission device). In addition, first motor 21A is arranged at rear left side in unit case 22 and controller 24A which has control board 24Aa in which electronic components for performing various electrical controls including control of first motor 21A are provided and a storage portion of various information and the like is disposed on rear right side in unit case 22. In addition, second motor 21B is arranged at the front left side in unit case 22 and controller 24B which has control board 24Ba in which electronic components for performing various electrical controls including control of second motor 21B are provided and a storage portion of various information and the like are disposed on the front right side in unit case 22. Controllers 24A and 24B may be arranged in one place without being divided into two portions.

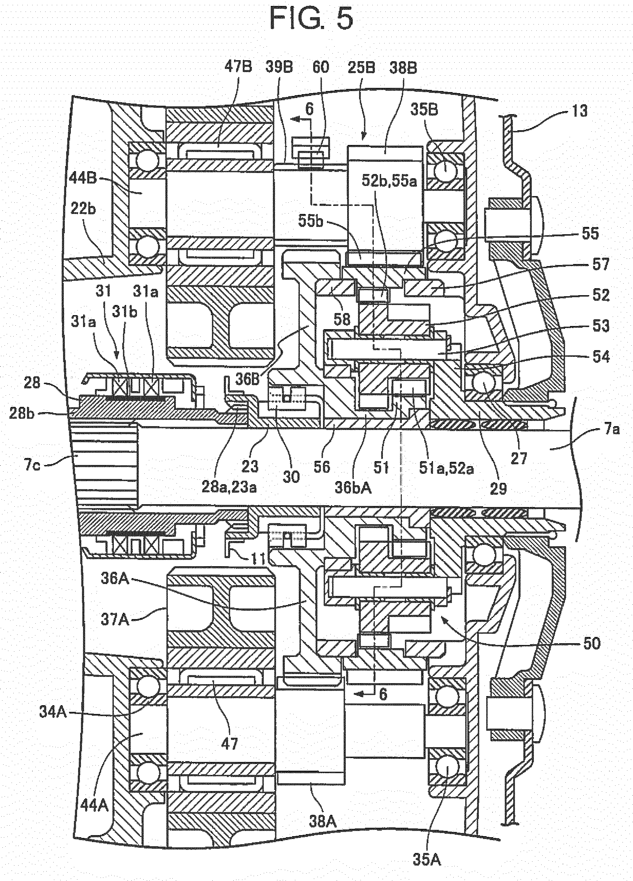

More specifically, as illustrated in FIG. 4, FIG. 5 and the like, driving unit 20 is rotatably arranged by bearings 26 and 27 in a state where crank shaft 7a passes through the central portion of driving unit 20 in the right and left direction, and cylindrical man power transfer body 28 is fitted into the outer periphery of a portion close to the left side of crank shaft 7a via serration portion (or spline portion) 7c in a state of being integrally rotated. Serration portion (or spline portion) 28b is formed at a position corresponding to serration portion (or spline portion) 7c of crank shaft 7a on the inner periphery of man power transfer body 28 to engage with serration portion (or spline portion) 7c of crank shaft 7a.

Magnetostrictive generator 31b to which magnetic anisotropy is imparted is formed on the outer peripheral surface of man power transfer body 28. In addition, coil 31a is arranged at the outer periphery thereof via a certain gap (space) and magnetostrictive torque sensor (man power detector) 31 is configured by magnetostrictive generator 31b and coil 31a. Accordingly, the man-powered driving force from crank shaft 7a is transferred to man power transfer body 28, and the man-powered driving force is detected by torque sensor 31. In addition, in magnetostrictive torque sensor 31, magnetostrictive generator 31b is formed in a spiral shape having, for example, +45 degrees and -45 degrees with respect to the axial direction of man power transfer body 28, and when the man-powered driving force is transferred to man power transfer body 28, the distortion occurs in magnetostrictive generator 31b on the surface of man power transfer body 28 and an increased portion and a decreased portion of the magnetic permeability are generated. Therefore, the magnitude of the torque (man-powered driving force) can be detected by measuring the inductance difference of the coil 31a.

Interlocking cylindrical body 23 is arranged in a state of being rotatable with respect to crank shaft 7a at a position adjacent to the right side of man power transfer body 28 on the outer periphery of crank shaft 7a, but serration portion (or spline portion) 28a formed on the outer peripheral surface of the right end portion of man power transfer body 28 is engaged to serration portion (or spline portion) 23a formed on the inner periphery of the left end portion of interlocking cylindrical body 23 so as to rotate integrally with man power transfer body 28. In the embodiment, serration portion (or spline portion) 23a formed on the inner periphery of the left end portion of interlocking cylindrical body 23 is engaged to serration portion (or spline portion) 28a of man power transfer body 28 from the outside.

In addition, in the embodiment, a rotation detecting body 11 for detecting the rotation state is attached to interlocking cylindrical body 23 and man power transfer body 28 (attaching portion of rotation detecting body 11 may be any portion of interlocking cylindrical body 23 and man power transfer body 28 and may be attached directly to crank shaft 7a.) Further, a rotation detector (not illustrated) is fixed to unit case 22 so as to interpose rotation detecting body 11 with a minute gap from the left and right. Here, since interlocking cylindrical body 23 and man power transfer body 28 integrally rotate with crank shaft 7a, interlocking cylindrical body 23 and man power transfer body 28 is configured so that the rotation amount and the rotation direction of crank shaft 7a and pedal 8 can be also detected by detecting the rotation amount and the rotation direction of interlocking cylindrical body 23 and man power transfer body 28.

In addition, deceleration gear (one deceleration gear) 36A for low speed provided on first deceleration mechanism 25A are arranged at the outer periphery of the right side portion of interlocking cylindrical body 23 via one-way clutch (one-way clutch for cutting the auxiliary drive force) 30. In a case where pedal 8 is advanced by pedaling, the man-powered driving force transferred to interlocking cylindrical body 23 is transferred to deceleration gear 36A for low speed of first deceleration mechanism 25A.

As illustrated in FIG. 4, first motor 21A is rotatably supported by motor bearings 32A and 33A so that rotation shaft 21Aa and rotor portion 21Ab are rotatable. In addition, rotation shaft 21Aa of first motor 21A is protruded to the right side, and motor shaft deceleration gear 40A to be described below is formed on the outer periphery of the protrusion portion.

As illustrated in FIG. 4 and FIG. 5, first deceleration mechanism 25A includes intermediate shaft 44A arranged parallel to crank shaft 7a, deceleration gear 36A for low speed, first intermediate shaft deceleration gear 37A, second intermediate shaft deceleration gear 38A, and motor shaft deceleration gear 40A which are deceleration gears. First deceleration mechanism 25A combines the man-powered driving force transferred through crank shaft 7a with the auxiliary driving force transferred from first motor 21A.

Intermediate shaft 44A of first deceleration mechanism 25A is arranged in a state of being rotatably supported by bearings 34A and 35A in a posture extending in the left and right at a position close to the rear portion of driving unit 20 and in parallel with crank shaft 7a. One-way clutch 47A for cutting the man-powered driving force, first intermediate shaft deceleration gear 37A with a large diameter, second intermediate shaft deceleration gear 38A with a small diameter, and the like are attached to intermediate shaft 44A. In a case where one-way clutch 47A for cutting the man-powered driving force is not cut, first intermediate shaft deceleration gear 37A and second intermediate shaft deceleration gear 38A integrally rotate together with intermediate shaft 44A.

Motor shaft deceleration gear 40A formed on rotation shaft 21Aa of first motor 21A has a small diameter and engages with first intermediate shaft deceleration gear 37A with a large diameter. Accordingly, the rotation of first motor 21A is decelerated and the torque of the auxiliary driving force from first motor 21A is amplified and transferred to intermediate shaft 44A. Second intermediate shaft deceleration gear 38A with a small diameter engages with deceleration gear 36A for low speed with a large diameter rotatably arranged at the outer periphery of crank shaft 7a. Accordingly, the man power transferred from crank shaft 7a via man power transfer body 28, interlocking cylindrical body 23, and one-way clutch 30 for cutting the auxiliary driving force is further transferred to deceleration gear 36A for low speed and is combined with the auxiliary driving force. In the embodiment, the resultant force obtained by combining the man-powered driving force and the auxiliary driving force of first motor 21A is transferred to sun gear 51 of planetary gear mechanism 50.

As illustrated in FIG. 4, second motor 21B is supported by motor bearings 32B and 33B so that rotation shaft 21Ba and rotor portion 21Bb are to be rotatable. In addition, rotation shaft 21Ba of second motor 21B protrudes to the right side and motor shaft deceleration gear 40B to be described below is formed on the outer periphery of the protrusion portion.

As illustrated in FIG. 4 and FIG. 5, second deceleration mechanism 25B includes intermediate shaft 44B arranged in parallel to crank shaft 7a, deceleration gear 36B for low speed, first intermediate shaft deceleration gear 37B, second intermediate shaft deceleration gear 38B, toothed portion 39B for locking, and motor shaft deceleration gear 40B which are deceleration gears. Intermediate shaft 44B of second deceleration mechanism 25B is arranged in a state of being rotatably supported by bearings 34B and 35B in a posture extending in the left and right at a position close to the front side of driving unit 20 in parallel with crank shaft 7a. One-way clutch 47B for cutting the man-powered driving force, first intermediate shaft deceleration gear 37B with a large diameter, second intermediate shaft deceleration gear 38B with a small diameter, and the like are attached to intermediate shaft 44B. In a case where one-way clutch 47B for cutting the man-powered driving force is not cut, first intermediate shaft deceleration gear 37B and second intermediate shaft deceleration gear 38B rotate integrally with intermediate shaft 44B.

Motor shaft deceleration gear 40B formed on rotation shaft 21Ba of second motor 21B has a small diameter and engages with first intermediate shaft deceleration gear 37B with a large diameter. Accordingly, the rotation of second motor 21B is decelerated, the torque of the auxiliary driving force from second motor 21B is amplified and transferred to intermediate shaft 44B. Second intermediate shaft deceleration gear 38B having a small diameter engages with internal gear 55 of planetary gear mechanism 50 from the outside. Accordingly, the torque of the auxiliary driving force from second motor 21B is transferred to internal gear 55 of planetary gear mechanism 50 in an amplified state.

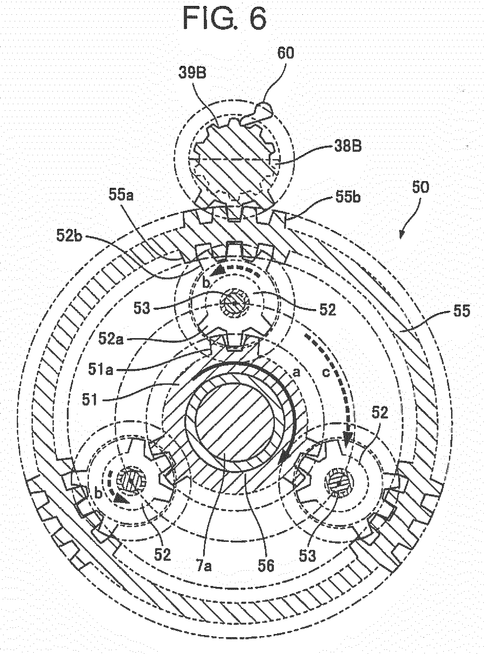

As illustrated in FIG. 5 and FIG. 6, planetary gear mechanism 50 of the embodiment is formed integrally with the outer periphery of right small diameter portion 36bA of deceleration gear 36A for low speed. Planetary gear mechanism 50 includes sun gear (first component in the embodiment) 51 arranged rotatably on the outer periphery of crank shaft 7a via bearing 56, a plurality (for example, three) of planetary gears 52 that engage with toothed portion 51a of sun gear 51 in a rotatable state with toothed portion 52a having a small diameter, planetary gear shaft 53 that rotatably supports planetary gears 52 respectively, planetary carrier 54 that supports planetary gear shafts 53 to be revolvable. Further, planetary gear mechanism 50 includes internal gear 55 (second component in the embodiment) which is supported rotatably coaxially with crank shaft 7a via bearings 57 and 58 and in which internal gear 55a is engaged with toothed portion 52b with a large diameter of planetary gear 52.

In addition, in the embodiment, external teeth 55b are formed on the outer periphery of internal gear 55 and external teeth 55b of internal gear 55 are engaged with second intermediate shaft deceleration gear 38B of second deceleration mechanism 25B. In addition, locking toothed portion 39B is further formed on intermediate shaft 44B of second deceleration mechanism 25B and a tip of a claw portion of one-way clutch (reverse rotation preventing mechanism) 60 that prevents internal gear 55 from being rotated in reverse direction to sun gear 51 (counterclockwise direction in FIG. 6) (in other words, intermediate shaft 44B of second deceleration mechanism 25B prevents from rotating in the clockwise direction in FIG. 6) is made engageable and disengageable on toothed portion 39B for locking.

In addition, right side planetary carrier 54 is integrally formed with resultant force transfer body 29 and the output from planetary carrier 54 of planetary gear mechanism 50 is transferred to resultant force transfer body 29. In other words, planetary gear mechanism 50 of the embodiment is configured so that the resultant force (first resultant force) of the man-powered driving force and the auxiliary driving force transferred from first motor 21A is input from sun gear 51, the auxiliary driving force transferred from second motor 21B is input from internal gear 55, and the resultant force (second resultant force) obtained by combining the auxiliary driving force and the internal driving force is output from planetary carrier 54. In addition, internal gear 55 is rotated in the same direction as sun gear 51 by the auxiliary driving force from second motor 21B, and thus the rotational speed of planetary carrier (third component in the embodiment) 54 of planetary gear mechanism 50 increases.

In the above configuration, at the time of starting of traveling of electric bicycle 1, first motor 21A is rotated according to the torque acting on crank shaft 7a, the auxiliary driving force from first motor 21A is added to the man-powered driving force, and a resultant force (first resultant force) obtained by combining the driving force and the auxiliary driving force of first motor 21A is transferred to sun gear 51 of planetary gear mechanism 50. Accordingly, as illustrated in FIG. 6, sun gear 51 of planetary gear mechanism 50 is rotated in a direction (clockwise direction) as viewed from the right side, and planetary gear 52 rotates in the b direction (counterclockwise direction).

On the other hand, second motor 21B is not driven at the time of starting of traveling of electric bicycle 1. At this time, since planetary gear 52 rotates in the b direction (counterclockwise direction), internal gear 55 tries to rotate counterclockwise by receiving force from planetary gear 52. However, since the one-way clutch (reverse rotation preventing mechanism) 60 is provided in second deceleration mechanism 25B, rotation of internal gear 55 in the counterclockwise direction is prevented and internal gear 55 is stationary. Accordingly, as illustrated in FIG. 6, planetary carrier 54 rotates in the c direction (clockwise direction) at a relatively low rotation speed, and the resultant force (first resultant force) obtained by combining the man-powered driving force and first motor 21A is output from resultant force transfer body 29 and the driving sprocket 13 which are rotated at a low speed.

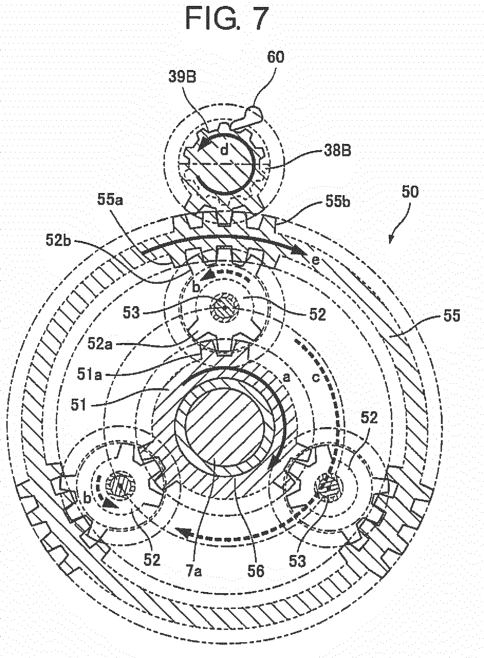

With such a configuration, in a state where electric bicycle 1 is traveling and the rotation number (cadence) of crank shaft 7a is increased, when transmission stage hand operation portion 18 is operated and instructed to change the speed to the high speed side, second motor 21B is driven. Accordingly, as illustrated in FIG. 7, second intermediate shaft deceleration gear 38B is rotated in the d direction (counterclockwise direction). Accordingly, internal gear 55 is rotated in the e direction (clockwise direction), and planetary gear 52 rotates at high speed in the b direction (counterclockwise direction) while also receiving the auxiliary driving force from second motor 21B. As a result, planetary carrier 54 rotates in the c direction (clockwise direction) at a relatively high rotational speed and the resultant force (second resultant force) obtained by further combining the auxiliary driving force of second motor 21B to the resultant force (first resultant force) obtained by combining the man-powered driving force and the auxiliary driving force of first motor 21A and is output from resultant force transfer body 29 and driving sprocket 13 which are rotated at a high speed. Further, when transmission stage hand operation portion 18 is operated and instructed to change the speed to a higher speed side, second motor 21B is driven at a higher speed rotation, and the second resultant force is output from resultant force transfer body 29 and driving sprocket 13 which are rotated at a higher speed.

Accordingly, by increasing the rotational speed of second motor 21B, the auxiliary driving force of second motor 21B is added, stepless output can be performed (traveling at a high speed) by being changed the speed to a larger rotation speed (high speed) from planetary carrier 54. In other words, by adjusting the rotational speed of second motor 21B, stepless transmission, rotation, and output can be performed from planetary carrier 54 as the third component in planetary gear mechanism 50. In addition, according to the configuration, since the auxiliary driving force of first motor 21A and second motor 21B is added using planetary gear mechanism 50, not the configuration that transfers the force by the frictional force, the transfer efficiency of force can satisfactorily be maintained.

In addition, by increasing the rotational speed of second motor 21B, there is an advantage that the rotation of the resultant force transfer body 29 and the driving sprocket 13 which are output portions can be adjusted very finely and smoothly. On the other hand, in the bicycle transmission disclosed in PTL 1, since the adjustment sleeve is configured to be mechanically rotated from outside to adjust the position of the double cone, components mechanically transmitting the position of the position adjustment component shall be provided. However, according to the embodiment of the invention, only the electric signal for adjusting the rotational speed of second motor 21B can be provided.

In addition, rather than only the man-powered driving force being transferred to sun gear 51 (first component of planetary gear mechanism 50 in the embodiment) of planetary gear mechanism 50, the resultant force obtained by combining the man-powered driving force and the auxiliary driving force from first motor 21A is transferred. Therefore, the output range of the force can be widened as compared with a use of a configuration which is combined the auxiliary driving force with the man-powered driving force after transmission, and a configuration which is combined with the man-powered driving force the auxiliary driving force after transmission.

In addition, according to the configuration described above, since one-way clutch (reverse rotation preventing mechanism) 60 for preventing internal gear 55 from rotating in the reverse direction to the rotation driving direction by second motor 21B is provided, the force corresponding to the man-powered driving force is output to rear wheel 4 side without trouble without energizing first motor 21A or second motor 21B, when auxiliary driving force is not added in a case where the remaining amount of the battery 12 is low, or the like.

On the other hand, the bicycle transmission system disclosed in PTL 2 is configured that man power is input to one component of the planetary gear mechanism (in the embodiment, carrier of planetary gear), and other components (in the embodiment, sun gear of planetary gear) is rotated by a motor (auxiliary drive) and thus output is performed from another component. Therefore, it is configured that, unless both motors are energized, a component (for example, sun gear) connected to the motor idle and thus man power is hardly output. In other words, in the bicycle transmission system disclosed in PTL 2, since both electric motors have to be energized at all times, there is a fear that the use efficiency of the battery is lowered, but, in the present embodiment, the occurrence of such a problem can be minimized.

In the present embodiment, a case where the first component (first component of planetary gear mechanism 50) to which the resultant force obtained by combining the man-powered driving force and the auxiliary driving force from first motor 21A is transferred is sun gear 51 is described. However, the present invention is not limited thereto and the first component to which the resultant force obtained by combining the man-powered driving force and the auxiliary driving force from first motor 21A is transferred may be the planetary carrier 74.

### (Second Embodiment)

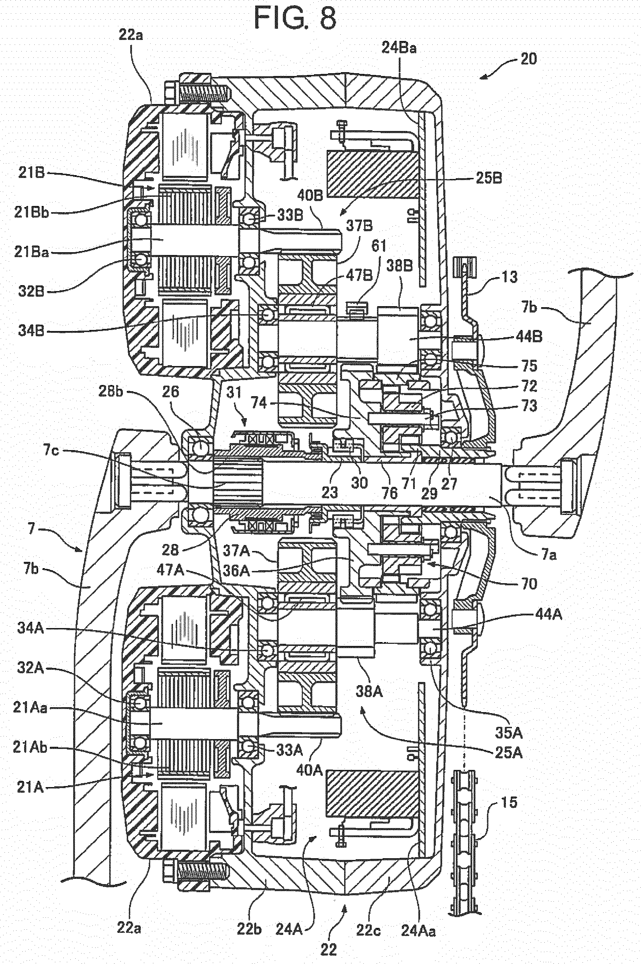

FIG. 8 to FIG. 11 illustrate a second embodiment of the invention having such a configuration.

As illustrated in FIG. 8 to FIG. 10, first motor 21A, second motor 21B, first deceleration mechanism 25A, second deceleration mechanism 25B, one-way clutch (reverse rotation preventing mechanism) 61 and the like are also provided in the embodiment. However, in the second embodiment, the right side portion of deceleration gear 36A for low speed, which is a deceleration gear, to which the resultant force obtained by combining the man-powered driving force and the auxiliary driving force from first motor 21A is transferred, is integrally formed as planetary carrier 74 of gear mechanism 70. In addition, resultant force transfer body 29 is integrally formed on the right side of sun gear 71 of planetary gear mechanism 70.

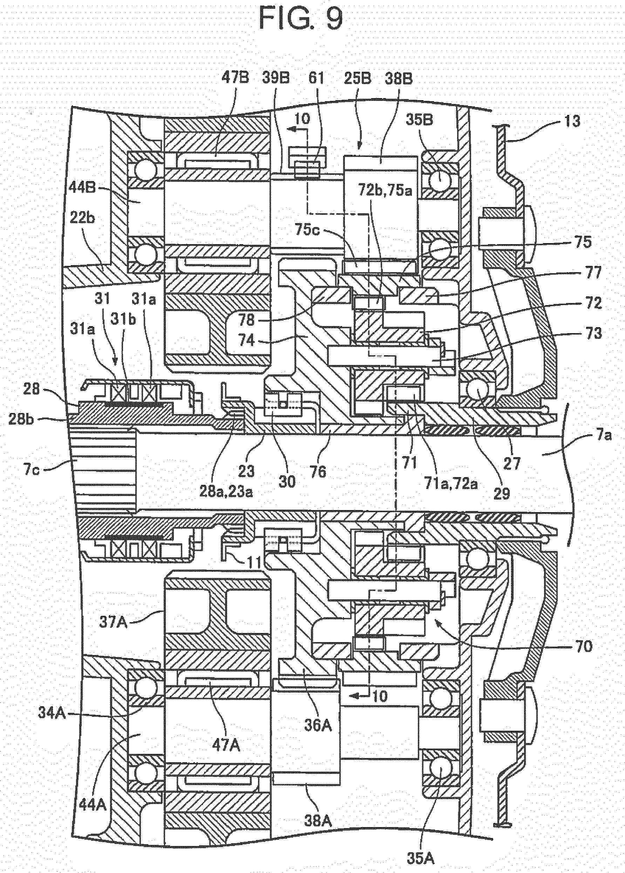

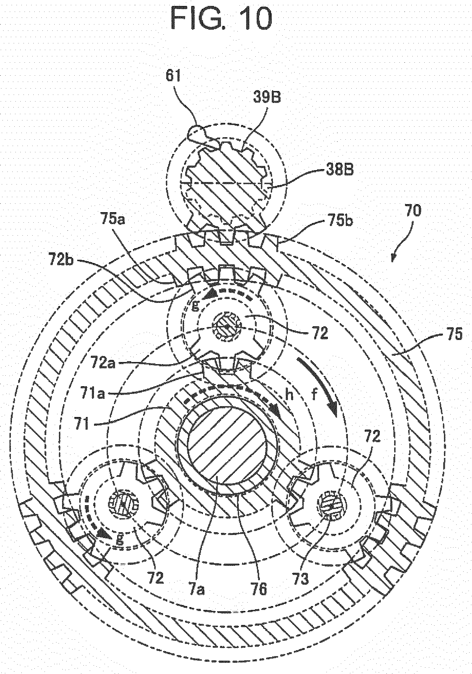

In other words, as illustrated in FIG. 9, FIG. 10, and the like, planetary gear mechanism 70 of the embodiment includes sun gear 71 rotatably arranged at the outer periphery of crank shaft 7a via bearing 76 and a plurality of (for example three) planetary gears 72 engaged with toothed portion 71a of sun gear 71 in a revolvable and rotatable state at toothed portion 72a with a small diameter. In addition, planetary gear mechanism 70 includes planetary gear shaft 73 rotatably supporting planetary gears 72 respectively and planetary carrier (first component in the embodiment) 74 that revolvably supports planetary gear shafts 73. Further, planetary gear mechanism 70 includes internal gear (second component in the embodiment) 75 which is supported rotatably coaxially with crank shaft 7a via bearings 77 and 78 and in which internal teeth 75a are rotatably engaged with teeth portion 72b with a large diameter of planetary gear 72 for the outer periphery side.

In addition, also in the embodiment, external teeth 75b is formed on the outer periphery of internal gear 75, and external teeth 75b of internal gear 75 is engaged with second intermediate shaft deceleration gear 38B of second deceleration mechanism 25B. In addition, locking toothed portion 39B is further formed on intermediate shaft 44B of second deceleration mechanism 25B, and a tip of a claw portion of one-way clutch (reverse rotation preventing mechanism) 61 preventing internal gear 75 from being rotated in the same direction as planetary carrier 74 (clockwise direction in FIG. 10) (in other words, preventing intermediate shaft 44B of second deceleration mechanism 25B from rotating in the counterclockwise direction in FIG. 10), is engageable and disengageable on toothed portion 39B for locking.

In addition, as described above, the right side portion of deceleration gear 36A for low speed, which is the deceleration gear, to which the resultant force obtained by combining the man-powered driving force and the auxiliary driving force from first motor 21A is transferred is integrally formed as planetary carrier 74 of gear mechanism 70. In addition, resultant force transfer body 29 is integrally formed on the right side of sun gear 71 of planetary gear mechanism 70 and an output from sun gear 71 of planetary gear mechanism 70 is transferred to resultant force transfer body 29. In other words, planetary gear mechanism 70 of the embodiment inputs the resultant force (first resultant force) of the man-powered driving force and the auxiliary driving force transferred from first motor 21A from planetary carrier (first component in the embodiment) 74. Further, the auxiliary driving force transferred from second motor 21B is input from internal gear (second component in the embodiment) 75. Then, the resultant force (second resultant force) obtained by combining the first resultant force and the auxiliary driving force transferred from second motor 21B is configured to be output from sun gear 71. In addition, internal gear 75 is rotated in the reverse direction to planetary carrier 74 by the auxiliary driving force from second motor 21B, so that the rotational speed of sun gear (third component in the embodiment) 71 increases.

In the configuration described above, at the time of starting of traveling of electric bicycle 1, first motor 21A is rotated corresponding to the torque acting on crank shaft 7a, the auxiliary driving force from first motor 21A is added to the man-powered driving force, a resultant force (first resultant force) obtained by combining the man-powered driving force and the auxiliary driving force of first motor 21A is transferred to planetary carrier 74 of planetary gear mechanism 70. Accordingly, as illustrated in FIG. 10, planetary carrier 74 of planetary gear mechanism 70 is rotated in the f direction (clockwise direction) as viewed from the right side.

On the other hand, second motor 21B is not driven at the time of starting of traveling of electric bicycle 1. In addition, since one-way clutch (reverse rotation preventing mechanism) 61 is provided in second deceleration mechanism 25B, the rotation of internal gear 75 in the clockwise direction is prevented. Accordingly, as illustrated in FIG. 10, planetary gear 72 rotates in the g direction (counterclockwise direction) at a relatively low rotational speed and in addition, sun gear 71 rotates in the h direction (clockwise direction) corresponding thereto. A resultant force (first resultant force) obtained by combining the man-powered driving force and first motor 21A is output from resultant force transfer body 29 and driving sprocket 13 which are rotated at a low speed.

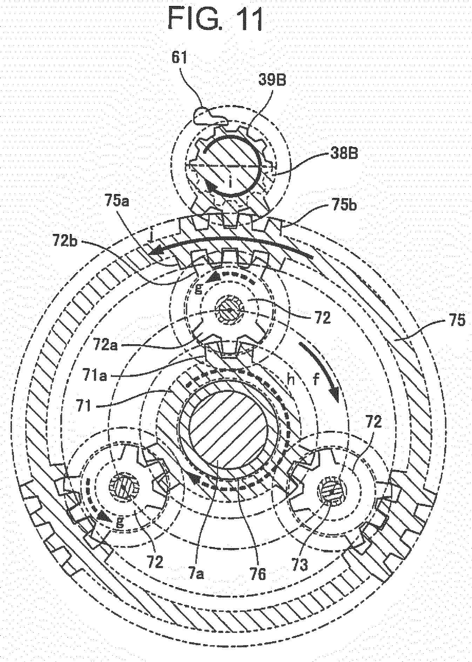

With such a configuration, in a state where electric bicycle 1 is traveling and the rotation number (cadence) of crank shaft 7a is increased, when transmission stage hand operation portion 18 is operated and instructed to change the speed to the high speed side, second motor 21B is driven. Accordingly, as illustrated in FIG. 11, second intermediate shaft deceleration gear 38B is rotated in the i direction (clockwise direction). Accordingly, internal gear 55 is rotated in the j direction (counterclockwise direction), and planetary gear 72 rotates at high speed in the g direction (counterclockwise direction) while also receiving the auxiliary driving force from second motor 21B. As a result, sun gear 71 rotates in the h direction (clockwise direction) at a relatively high rotation speed, and the resultant force (second resultant force) obtained by combining the auxiliary driving force of second motor 21B in addition to the resultant force (first resultant force) obtained by combining the man-powered driving force and the auxiliary driving force of first motor 21A, is also output from resultant force transfer body 29 and driving sprocket 13 which are rotated at a high speed. Further, when transmission stage hand operation portion 18 is operated and instructed to change the speed to a higher speed side, second motor 21B is driven at a higher speed, and the second resultant force is output from resultant force transfer body 29 and driving sprocket 13 which are rotated at a high speed.

Accordingly, by increasing the rotational speed of second motor 21B, second motor 21B is changed the speed to a larger rotational speed (high rotation speed) and is possible to perform stepless output (traveling at high speed) while also adding the auxiliary driving force of the second motor. In addition, according to the configuration, since the auxiliary driving force of first motor 21A and second motor 21B is added using planetary gear mechanism 50, not the configuration that transfers the force by the frictional force, the transfer efficiency of force can satisfactorily be maintained.

In addition, by increasing the rotational speed of second motor 21B, there is an advantage that the rotation of the resultant force transfer body 29 and the driving sprocket 13 which are output portions can be adjusted very finely and smoothly. In addition, without only the man-powered driving force being transferred to planetary carrier 74 (first component of planetary gear mechanism 70 in the embodiment) of planetary gear mechanism 70, a resultant force obtained by combining the man-powered driving force and the auxiliary driving force from first motor 21A is transferred. Therefore, the output range of the force can be widened as compared with a use of a configuration which is combined the auxiliary driving force with the man-powered driving force after transmission, and a configuration which is combined with the man-powered driving force the auxiliary driving force after transmission.

In addition, according to such a configuration, a one-way clutch (reverse rotation preventing mechanism) 61 for preventing internal gear 75 from rotating in the reverse direction to the rotation direction by second motor 21B is provided. Therefore, when the auxiliary driving force is not added, in a case where the remaining amount of battery 12 is low, or the like, the force corresponding to the man-powered driving force can be output to rear wheel 4 side without trouble without energizing first motor 21A and second motor 21B.

In the above embodiment, a case where the first component of planetary gear mechanisms 50 and 70 to which the resultant force obtained by combining the man-powered driving force and the auxiliary driving force from first motor 21A is transferred is sun gear 51 and planetary carrier 74 is described. However, the present invention is not limited thereto and is also possible to use an internal gear as the first component of the planetary gear mechanism to which the resultant force obtained by combining the man-powered driving force and the auxiliary driving force from the first motor is transferred can be also used. In addition, in the embodiment described above, a case where the second components of planetary gear mechanisms 50 and 70 to which the auxiliary driving force from second motor 21B is transferred are internal gears 55 and 75 is described. However, the present invention is not limited thereto, and a sun gear or a planetary carrier as the second component of the planetary gear mechanism to which the auxiliary driving force from the second motor is transferred can be also used (in this case, however, planetary carrier (a case where sun gear is used as second component) or sun gear (a case where a planetary carrier is used as second component) is used as first component). In addition, in the embodiment described above, a case where the third component to which the output resultant force from planetary gear mechanisms 50 and 70 is output (to be performed stepless transmission and rotation) is planetary carrier 54 of planetary gear mechanism 50 and sun gear 71 of planetary gear mechanism 70 is described. However, the present invention is not limited thereto, and an internal gear can be also used as the third component which outputs the output resultant force from the planetary gear mechanism (performs stepless transmission and rotation). Accordingly, in a case where an internal gear is used as the third component, a sun gear and a planetary carrier are used as the first component and the second component.

In addition, in the above embodiment, the case where chain 15 is used as the endless driving force transfer body and thus the force from driving sprocket 13 is transferred to rear sprocket 14 via chain 15 is described. However, the present invention is not limited thereto, and it is configured that a toothed belt may be used as the endless driving force transmission body and thus the force is transferred from the driving gear corresponding to the driving sprocket to a rear gear via the toothed belt.

### INDUSTRIAL APPLICABILITY

The present invention is applicable to various types of electric bicycles which can travel by adding an auxiliary driving force generated by a motor to a man-powered driving force by a pedaling force by the pedal.

### REFERENCE MARKS IN THE DRAWINGS

1: electric bicycle
2: frame
2: ahead pipe
2b: front fork
2c: main pipe
2d: vertical pipe
2e: chain stay
2f: seat stay
3: front wheel
4: rear wheel
5: handle
6: saddle
7: crank
7a: crank shaft
7b: crank arm
7c: serration portion (spline portion)
8: pedal
9: hub
11: rotation detecting body
12: battery
13: driving sprocket
14: rear sprocket
15: chain (endless driving force transfer body)
17: chain cover
18: transmission stage hand operation portion
20: driving unit
21A: first motor
21Aa, 21Ba: rotation shaft
21Ab, 21Bb: rotor portion
21B: second motor
22: unit case
22a: motor case
22b: left case
22c: right case
23: interlocking cylindrical body
23a: serration portion (spline portion)
24A, 24B: controller
24Aa, 24Ba: control board
25: planetary gear mechanism
25A: first deceleration mechanism
25B: second deceleration mechanism
26, 27, 34A, 34B, 35A, 56, 57, 76, 77: bearing
28: man power transfer body
28a, 28b: serration portion (spline portion)
29: resultant force transfer body
30: one-way clutch (one-way clutch for cutting auxiliary driving force)
31: torque sensor (man power detector)
31a: coil
31b: magnetostrictive generator
32A, 32B, 33A, 33B: motor bearing
36A, 36B: deceleration gear for low speed (deceleration gear)
37A, 37B: first intermediate shaft deceleration gear (deceleration gear)
38A, 38B: second intermediate shaft deceleration gear (deceleration gear)
39B: toothed portion for locking (deceleration gear)
40A, 40B: motor shaft deceleration gear (deceleration gear)
44A, 44B: intermediate shaft
47, 47A, 47B: one-way clutch for cutting man power driving force
50: planetary gear mechanism
51: sun gear
52: planetary gear
53: planetary gear shaft
54: planetary carrier
55: internal gear
60, 61: one-way clutch (reverse rotation preventing mechanism)
70: planetary gear mechanism
71: sun gear
72: planetary gear
73: planetary gear shaft
74: planetary carrier
75: internal gear

## Claims

1. An electric bicycle which includes a driving unit having a motor and which can travel by adding an auxiliary driving force generated by the motor to a man-powered driving force by a pedaling force from a pedal, the bicycle comprising:
a crank shaft to which the man-powered driving force from the pedal is transferred; and
a planetary gear mechanism that includes a planetary carrier which rotatably supports a planetary gear, a sun gear, and an internal gear,
wherein the motor includes a first motor and a second motor,
wherein a resultant force obtained by combining the man-powered driving force and the auxiliary driving force from the first motor is transferred to a first component which is any one of the planetary carrier, the sun gear, and the internal gear in the planetary gear mechanism,
wherein the auxiliary driving force from the second motor is transferred to a second component which is any one of the planetary carrier, the sun gear, and the internal gear in the planetary gear mechanism and which is different from the first component, and
wherein a third component, which is any one of the planetary carrier, the sun gear, and the internal gear in the planetary gear mechanism and is different from the first component and the second component is configured to perform a stepless transmission so as to be rotatable by adjusting a rotational speed of the second motor.

2. The electric bicycle of Claim 1,
wherein the second component is the internal gear.

3. The electric bicycle of Claim 2, further comprising:
a reverse rotation preventing mechanism that prevents the internal gear from rotating in a reverse direction to a rotation driving direction by the second motor.

4. The electric bicycle of any one of Claims 1 to 3,
wherein the first component is the sun gear.

5. The electric bicycle of any one of Claims 1 to 3,
wherein the first component is the planetary carrier.

6. The electric bicycle of any one of Claims 1 to 3,
wherein the second motor is configured to be rotatable after starting of traveling without being driven at the time of starting traveling.

7. The electric bicycle of any one of Claims 1 to 3,
wherein the planetary gear mechanism is arranged in an inside of the driving unit,
wherein the driving unit is arranged at an intermediate position between a front wheel and a rear wheel, and
wherein the sun gear and the internal gear of the planetary gear mechanism are arranged coaxially with the crank shaft.

8. The electric bicycle of any one of Claims 1 to 3,
wherein the man-powered driving force, the auxiliary driving force from the first motor, and the auxiliary driving force from the second motor are combined with each other via the planetary gear mechanism as a resultant force for output, and
wherein the resultant force for output is configured to be transferred to the rear wheel via a driving force output wheel body which is coaxial with the crank shaft and an endless driving force transmitting body wound around the driving force output wheel body.

9. The electric bicycle of any one of Claims 1 to 3,
wherein the driving force output wheel body which is coaxial with the crank shaft is configured to rotate at a higher speed by rotating the second motor at higher speed.

10. The electric bicycle of Claim 8,
wherein a chain is used as the endless driving force transmitting body.

11. The electric bicycle of Claim 8,
wherein a toothed belt is used as the endless driving force transmitting body.
